# EUROPEAN PATENT SPECIFICATION

(11) **EP 1 462 351 B1**
(45) Date of publication and mention of the grant of the patent: **09.05.2012**
(21) Application number: 04006838.9
(22) Date of filing: 22.03.2004
(51) Int. Cl.: B62K 11/04, B62K 19/12

(54) **Motorcycle**
Motorrad
Motocyclette

(30) Priority: 28.03.2003 JP 2003092438
(43) Date of publication of application: 29.09.2004
(73) Proprietor: Yamaha Hatsudoki Kabushiki Kaisha, Iwata-shi, Shizuoka-ken (JP)
(72) Inventor: Katsuran, Takehisa, Iwata-shi Shizuoka-ken (JP)
(74) Representative: Grünecker, Kinkeldey, Stockmair & Schwanhäusser

(56) References cited:
- EP-A1- 1 459 969
- EP-A2- 0 826 584
- JP-A- 61 291 284
- NL-A- 9 200 275
- US-A- 4 561 670
- US-A1- 2002 189 878
- US-A1- 2003 006 580
- US-B1- 6 446 996
- US-B1- 6 481 522

## Description

The invention relates to a motorcycle having a body frame.

Such a motorcycle, for example, a motocross motorcycle, should be able to jump down from high places to the road surface, which may cause high shock loads transmitted from the road surface to be applied to the body frame.

This therefore requires the body frame to have high rigidity and strength against the shock loads as well as to be lightweight.

JP-A-Sho 61-291281 and JP-A-Sho 62-26177 disclose body frames for such motorcycles which have rigidity and strength thereby having a casting or forging head pipe and gusset formed as a single unit.

Such a conventional frame having a casting head pipe and gusset must have a sufficient thickness due to manufacturing reasons, for not only a certain part of the frame that requires high strength but also the other parts commonly casted that do not require high strength. This may provide insufficient weight reduction effects of the frame, however.

In addition, the frame having a one piece forging head pipe and gusset results in increased manufacturing cost compared to the frame using the casting members. It further results in a problem of low flexibility in frame form and size.

Alternatively, EP 1 459 969 A1, which forms prior art according to Article 54(3) EPC, discloses a main frame of a motorcycle comprising a head pipe unit with a head pipe and a main frame main body. This main frame body is constitute by integrally forming with a die casting, an upper main frame section 23 and a lower main frame section 24 extending both obliquely downward to the rear of the vehicle from an upper end and lower end, respectively, from the head pipe. Attached to the lower end upper frame section are the down frame and the left and right rear arm bracket 10, wherein the down frame is formed of a left and right down frame section 30. Both rear ends of the down frame and the rear arm brackets opposed to the turning portion with the lower and upper frame section are somehow connected by a cross member section 33 which is integrally formed by an aluminum forged molded product in the down frame.

The closest prior art document US6446996B1 discloses (references applying to this document):
a motorcycle having a body frame including a main frame (1) with head pipe unit comprising a head pipe (2) for supporting a front fork (3) and a gusset (55), wherein a reinforcing member extending obliquely downward from a top of the head pipe (2) toward a rear of the motorcycle and another reinforcing member (54) extending downward from a bottom of the head pipe (2), further a pair of left and right down tubes (32) extending toward the rear of the motorcycle, and wherein further reinforcing members (41) are interposed as a pair of left and right members across rear ends of the left and right down tubes (32) and connecting them to each other for supporting the at least one rear arm (35) for up-down swinging, and wherein the left and right members (41) are connected to each other via a frame element (49) extending in the motorcycle width direction and said reinforcing members (10,30,31) are forging products, provided at a portion of the main frame (2a) that requires high strength against shock loads.

It is, therefore, an object of the invention to provide a motorcycle having a body frame capable of ensuring rigidity and strength of the body frame while reducing the frame weight and the manufacturing cost.

Preferably, it should be possible to improve a flexibility in frame form and size.

For a motorcycle of the above kind, this object is solved in an inventive manner by the features of independent claim 1. Said main frame comprises a reinforcing member, which is a forging product, provided at a portion of the main frame that requires high strength against shock loads, and further comprises a head pipe unit, tubes and a frame element, which are non-forging products, and which are connected to the reinforcing member.

Preferably, the main frame comprises a head pipe unit including a head pipe supporting the front fork, and upper and lower gussets extending obliquely downward, in particular while widening to the rear of the motorcycle from the head pipe.

More preferably, the main frame comprises a pair of left and right down tubes connected to a lower end of the lower gusset and extending downwardly toward the rear of the motorcycle.

Therein, it is preferably that at least one frame element of the main frame, in particular the head pipe unit or a portion thereof, such as the upper and lower gusset, the head pipe, and/or the connecting portion, are casting products.

It is even more preferable that at least one frame element of the main frame, in particular the right and left down tubes and/or a cross pipe, are made of extrusion products.

According to an embodiment, said reinforcing member comprises a pair of side walls and a connecting wall for connecting said side walls, said walls forming an outwardly open space between inner faces thereof and in that an external face of the connecting wall in cross-section is positioned in said portion of the main frame that requires high strength on a side where highest stress occurs in cross-section of the main frame.

According to a further embodiment, the reinforcing member comprises a down frame member having a lower head connected to a lower end of the head pipe and a down frame extending from the lower head along a lower edge of the lower gusset, said down frame covering the lower edge of the lower gusset from below and having the connecting wall with its external face facing downward and the sidewalls jointed to each lower edge of the lower gusset.

Therein, preferably the reinforcing member comprises a tank rail member having an upper head connected to an upper end of the head pipe and a tank rail extending from the upper head along the upper edge of the upper gusset, said tank rail covering the upper edge of the upper gusset from above and having the connecting wall with its external face facing upward and the sidewalls jointed to each upper edge of the upper gusset and, more preferably, said lower head of said down frame member and/or said upper head of said tank rail member comprises a bearing seat.

It is desirable that the head pipe unit has an opening at an undersurface of the lower gusset, and in that the down frame closes the opening at the undersurface of the lower gusset, the connecting wall with its external face facing downward and the sidewalls being positioned at each edge of the opening at the undersurface, and wherein edges of said sidewalls are welded to the lower gusset and, further, that the head pipe unit has an opening on a top surface of the upper gusset and in that the tank rail closes the opening on the top surface of the upper gusset, the connecting wall with its external face facing upward and the sidewalls being positioned at each edge of the opening of the top surface, and wherein edges of said sidewalls are welded to the upper gusset.

It is also possible that a connecting portion is formed integrally with the head pipe unit connecting rear portions of the upper and lower gussets to each other and/or that a rear cushion bracket is formed integrally with a rear end of the upper gusset and extends therefrom.

According to the invention, the main frame comprises: a head pipe for supporting a front fork; a tank rail extending obliquely downward from a top of the head pipe toward a rear of the motorcycle; a down frame extending downward from a bottom of the head pipe; and a pair of left and right down tubes extending toward the rear of the motorcycle, wherein the reinforcing member comprises a pair of left and right rear arm brackets interposed across rear ends of the left and right down tubes and the rear end of the upper gusset and/or of the tank rail and connecting them to each other and for supporting the at least one rear arm for up-down swinging.

Therein, a part of the connecting wall of each of said rear arm brackets which is adjacent to the connecting portion with the tank rail has its external face facing towards an inner side in a motorcycle width direction.

According to still another embodiment, each of the left and right rear arm brackets includes a lower half portion approximately vertically extending upward from the respective rear ends of the left and right down tubes positioned with an interval in a motorcycle width direction when viewed in the longitudinal direction of the motorcycle, and an upper half portion obliquely extending inwardly in the motorcycle width direction from the lower half portion to a rear end of the tank rail positioned in a center of the motorcycle width direction, said upper half portion having its connecting wall with its external face facing inside in the motorcycle width direction and said lower half portion having its connecting wall with its external face facing outwardly. In particular, it is preferable that a connecting portion of the rear arm brackets to the tank rail is welded thereto such that the connecting wall has its external face facing towards the outer side in the motorcycle width direction, said connecting portion with the tank rail having a closed cross-section.

It is also desirable that the lower ends of the left and right rear arm brackets are connected to each other via, a preferably angular cylindrical, cross pipe extending in the motorcycle width direction, wherein preferably a work hole is formed through a portion thereof to receive a fastening bolt for changing pedals on the cross pipe.

Additionally, it is possible that the down frame has, at its lower end, a receiving portion provided with a mounting opening facing forward with respect to the motorcycle, and/or each of the left and right rear arm brackets has, at its lower end, a receiving portion provided with a mounting opening facing forward, and/or each of the left and right down tubes has its rear end attached to the receiving portion of the rear arm bracket from the front of the motorcycle, and its front end attached to the receiving portion of the down frame from the front of the motorcycle, said ends being preferably welded to the respective receiving portions.

As described before, a body frame for a motorcycle according to an embodiment, on which an engine unit is mounted, includes a main frame for supporting a front fork and rear arms, characterized in that the main frame has a reinforcing member, which is a forging product, provided in its portion that requires high strength against shock load transmitted from a road surface and including a pair of sidewalls and a connecting wall for connecting said sidewalls, said walls creating spaces opened outward in cross-section such that the connecting wall has the external face positioned in said portion that requires high strength, that is, on the side where highest stress occurs in cross-section.

Therein, the main frame comprises a head pipe unit, which is made up of casting products, including a head pipe for supporting the front fork, and upper and lower gussets extending obliquely downward while widening to the rear of the vehicle from the head pipe, and wherein the reinforcing member is a down frame member comprising: a lower head connected to the lower end of the head pipe and having a bearing seat; and a down frame extending from the lower head along the lower edge of the lower gusset, said down frame covering the lower edge of the lower gusset from below and having the connecting wall with its external face facing downward and the sidewalls jointed to each lower edge of the lower gusset.

Additionally or alternatively, the main frame comprises a head pipe unit, which is made up of casting products, including a head pipe for supporting the front fork, and upper and lower gussets extending obliquely downward while widening to the rear of the vehicle from the head pipe, and wherein the reinforcing member is a tank rail member comprising: an upper head connected to the upper end of the head pipe and having a bearing seat; and a tank rail extending from the upper head along the upper edge of the upper gusset, said tank rail covering the upper edge of the upper gusset from above and having the connecting wall with its external face facing upward and the sidewalls jointed to each upper edge of the upper gusset.

In other words, such a motorcycle may comprise a body frame, wherein the main frame comprises a head pipe unit, which is made up of casting products, including a head pipe for supporting the front fork, and upper and lower gussets extending obliquely downward while widening to the rear of the vehicle from the head pipe, and wherein the reinforcing member is a down frame member comprising: a lower head connected to the lower end of the head pipe and having a bearing seat; and a down frame extending from the lower head along the lower edge of the lower gusset, and is a tank rail member comprising: an upper head connected to the upper end of the head pipe and having a bearing seat; and a tank rail extending from the upper head along the upper edge of the upper gusset, said down frame covering the lower edge of the lower gusset from below and having the connecting wall with its external face facing downward and the sidewalls jointed to each lower edge of the lower gusset, and said tank rail member covering the upper edge of the upper gusset from above and having the connecting wall with its external face facing upward and the sidewalls jointed to each upper edge of the upper gusset.

Preferably, the head pipe unit has an opening on the undersurface of the lower gusset, and wherein the down frame is so disposed to close the opening on the undersurface of the lower gusset and have the connecting wall with its external face facing downward and the sidewalls positioned at each edge of the opening on the undersurface, the edges of said sidewalls welded to the lower gusset.

It is also possible that the head pipe unit has each opening on the top surface of the upper gusset and the undersurface of the lower gusset, wherein the down frame is so disposed to close the opening on the undersurface of the lower gusset and have the connecting wall with its external face facing downward and the sidewalls positioned at each edge of the opening on the undersurface, the edges of said sidewalls welded to the lower gusset, and wherein the tank rail is so disposed to close the opening on the top surface of the upper gusset and have the connecting wall with its external face facing upward and the sidewalls positioned at each edge of the opening on the top surface, the edges of said sidewalls welded to the upper gusset.

Therein, a connecting portion is preferably formed integrally with the head pipe unit to connect the rear portions of the upper and lower gussets to each other, and a rear cushion bracket is formed integrally with the rear end of the upper gusset extends therefrom.

Alternatively or additionally, the main frame comprises: a head pipe for supporting the front fork; a tank rail extending obliquely downward from the top of the head pipe toward the rear of the vehicle; a down frame extending downward from the bottom of the head pipe; and a pair of left and right down tubes extending toward the rear of the vehicle, and wherein the reinforcing member is a pair of left and right rear arm brackets interposed across the rear ends of the left and right down tubes, and the rear end of the tank rail to connect them each other and supporting the rear arms for up-down swinging, each of said rear arm brackets being disposed such that a part of the connecting wall, which is adjacent to the connecting portion with the tank rail, has the external face facing inner side in the vehicle width direction.

Therein, each of the left and right rear arm brackets may include a lower half portion approximately vertically extending upward from each rear end of the left and right down tubes positioned with an interval in the vehicle width direction when viewed in the longitudinal direction of the vehicle, and an upper half portion obliquely extending inner side in the vehicle width direction from the lower half portion toward the rear end of the tank rail positioned in the center of the vehicle width direction, said upper half portion having the connecting wall with its external face facing inner side in the vehicle width direction and said lower half portion having the connecting wall with its external face facing outward.

Further preferably, a connecting portion of the rear arm brackets to the tank rail is welded thereto such that the connecting wall has the external face facing outer side in the vehicle width direction, said connecting portion with the tank rail having a closed cross-section.

In particular, the lower ends of the left and right rear arm brackets are connected to each other via an angular cylindrical cross pipe made of extrusion extending in the vehicle width direction, and/or a work hole is formed through a portion to receive a fastening bolt for change pedals on the cross pipe.

In other words, a motorcycle may have a body frame, wherein the main frame comprises: a head pipe unit including a head pipe for supporting the front fork, and upper and lower gussets extending obliquely downward while widening to the rear of the vehicle from the head pipe; and a pair of left and right down tubes connected to the lower end of the lower gusset and extending downward toward the rear of the vehicle, and wherein the reinforcing member is a down frame member comprising: a lower head connected to the lower end of the head pipe and having a bearing seat; and a down frame extending from the lower head along the lower edge of the lower gusset, a tank rail member including the upper head connected to the upper end of the head pipe and a tank rail extending from the upper head along the upper edge of the upper gusset, and left and rear arm brackets interposed across the rear ends of the left and right down tubes and the rear end of the upper gusset to connect them each other, said down frame covering the lower edge of the lower gusset from below and having the connecting wall with its external face facing downward and the sidewalls jointed to each lower edge of the lower gusset, and said tank rail, said tank rail member covering the upper edge of the upper gusset from above and having the connecting wall with its external face facing upward and the sidewalls jointed to each upper edge of the upper gusset, and each of said rear arm brackets being disposed such that a part of the connecting wall, which is adjacent to the connecting portion with the tank rail, has the external face facing inner side in the vehicle width direction.

Again, preferably, the down frame has, at its lower end, a receiving portion provided with a mounting opening facing forward of the vehicle, wherein each of the left and right rear arm brackets has, at its lower end, a receiving portion provided with a mounting opening facing forward, and wherein each of the left and right down tubes has its rear end attached to the receiving portion of the rear arm bracket from the front of the vehicle, and its front end attached to the receiving portion of the down frame from the front of the vehicle, said ends being welded to the respective receiving portions.

As described before, according to an embodiment of a motorcycle having a body frame, the main frame has a reinforcing member, which is a forging product formed into a C-shape in cross section and a U-shape in cross-section, provided in its portion that requires high strength such that the reinforcing member has the connecting wall with its external face positioned in said portion that requires high strength, that is, on the side where highest stress occurs in cross-section.

This allows shock load transmitted from the road surface to be received by the connecting wall of the reinforcing member, thereby ensuring rigidity and strength for the portion of the main frame that requires high strength. Therefore, the other portion that requires no high strength cannot be unnecessarily thick, resulting in a reduced frame weight.

According to a preferred embodiment, the reinforcing member is a down frame member jointed to the undersurface of the head pipe and extending along the undersurface of the lower gusset to be jointed to the lower gusset, which has the connecting wall facing downward. This therefore ensures rigidity and strength against high shock load applied adjacent to the lower-face connecting portion of the head pipe to the lower gusset. In other words, the motorcycle jumps down from high places to the road surface, which causes the front and rear wheels to rebound. This results in high tensile load acting on the lower-face connecting portion of the head pipe to the gusset, and accordingly, highest tensile stress occurs on the undersurface of said connecting portion. However, preferably, the reinforcing member has the connecting wall with its external face positioned on the side where the highest stress occurs. This allows the high tensile load to be received by the high-strength reinforcing member.

In particular, the lower head can be provided with bearing seats so that the high-strength reinforcing member can support the front fork, thereby enhancing rigidity and strength for a portion that requires high strength.

As described above, preferably the head pipe unit is made up of casting products, thereby ensuring required strength while reducing the weight of the head pipe unit as well as improving flexibility in unit form and size.

According to another embodiment, the reinforcing member is a tank rail member jointed to the top surface of the head pipe and extending along the top surface of the upper gusset to be jointed to the upper gusset, which has the connecting wall facing upward.

This therefore ensures rigidity and strength against high shock load applied adjacent to the upper-face connecting portion of the head pipe to the upper gusset. In other words, the motorcycle jumps down from high places to the road surface, which causes the front and rear wheels to rebound. This results in high compression load acting on the upper-face connecting portion of the head pipe to the gusset, and accordingly highest compression stress occurs on the top surface of said connecting portion. However, preferably, the reinforcing member has the connecting wall with its external face positioned on the side where the highest stress occurs. This allows the high compression load to be received by the high-strength reinforcing member.

Moreover, it is desirable that the down frame member and the tank rail member are jointed to the lower gusset and the upper gusset of the head pipe unit, respectively, and the head pipe unit is interposed between the reinforcing members on its undersurface and top surface. This further enhances the rigidity and strength of the entire head pipe unit.

It is even more desirable that an opening of the head pipe unit on the lower gusset is closed by welding the down frame member as the reinforcing member thereto and/or that an opening on the upper gusset is closed by welding the tank rail thereto.

Accordingly, this can further reduce the weight of the head pipe unit by said openings and ensure required strength. The reinforcing member to be welded is preferably so disposed as to have the connecting wall with its external face facing outward and each sidewall with its edges positioned at the opening edges of the upper and lower gussets and welded to the wall of the gusset.

This allows the welded line to be positioned apart from the external face of the connecting wall of the reinforcing member or the side where highest stress occurs, thereby preventing the highest stress from acting on the welded portion.

Still more preferably, the connecting portion and the rear cushion bracket are formed integrally with the head pipe unit. This can reduce the number of components and costs.

According to still another embodiment, the left and rear arm brackets are made up of reinforcing members and each of the reinforcing members has the connecting wall with its external face positioned on the side where highest stress occurs.

This can ensure rigidity and strength against high load applied to the rear arm brackets. In other words, high load acting on the rear cushion results in high tensile load applied to the upper portion of the rear arm bracket for which the external face of the connecting wall of the rear arm bracket made up of the reinforcing member is provided in the present invention so that required rigidity and strength can be ensured.

Therein, the rear arm bracket has advantageously the connecting wall with its external face facing inner side of the vehicle on its upper half portion and facing outer side of the vehicle on its lower half portion. This can ensure required rigidity and strength on the upper half portion while ensuring the rider's comfort when holding the lower half portions between his/her legs.

In other words, it is possible that the rear arm bracket has the upper half portion obliquely extending inward to the center or the tank rail from each of the left and right down frames provided with an interval in the vehicle width direction. High load acting on the rear end of the tank rail via the cushion unit results in load applied to the obliquely-extending upper half portion in the direction that it is pulled in straight. Accordingly, high tensile stress occurs on the inner side of the rear arm bracket, which may be withstood by the external face of the connecting wall provided thereon.

A rider holds the lower half portions between his/her legs to maintain the driving posture. In the described embodiment, each of the lower half portions has the connecting wall with its external face facing outward, which allows preventing the rider's discomfort.

Accordingly, it is desirable that a connecting portion of the rear arm brackets to the tank rail is provided with the connecting wall having the external face facing outward. This results in a box-shaped closed cross-section formed in the connecting portion of the rear arm brackets to the tank rail, thereby enhancing rigidity and strength thereof.

A further embodiment provides a motorcycle in which the lower ends of the left and right rear arm brackets are connected to each other via a cross pipe made of extrusion. A work hole is preferably formed through a portion to receive the fastening bolt for the change pedals on the cross pipe. This ensures required strength of the cross pipe while reducing the weight thereof. Furthermore, this can facilitate the adjustments in angle to mount the change pedals.

In any case, it is desirable that the reinforcing members including the down frame member and the tank rail member are welded along the undersurface and the top surface of the head pipe unit, respectively, and the down tubes and the tank rail member are jointed via the additional reinforcing members or the rear arm brackets. Said three types of reinforcing members can generally enclose a portion of the main frame that requires highest strength, thereby reducing the frame weight and enhancing rigidity and strength of the entire main frame.

Also, preferably, the down frame member has a receiving portion provided with a mounting opening facing forward of the vehicle, each of the left and right rear arm brackets has a receiving portion provided with a mounting opening facing forward, and each of the down tubes has its rear end attached to the receiving portion of the rear arm bracket from the front of the vehicle, and its front end attached to the receiving portion of the down frame from the front of the vehicle, said ends being welded to the respective receiving portions. This allows more accurate and easier assembly of the down tubes, thereby enhancing workability.

Further preferred embodiments are subject to the subclaims.

In the following, the invention will be described in greater detail by means of an embodiment thereof with reference to the accompanying drawings, wherein:
- Fig. 1: is a side view of a motorcycle comprising a body frame according to a first embodiment of the present invention;
- Fig. 2: is a perspective view of a main frame of the body frame;
- Fig. 3: is a perspective view of the main frame;
- Fig. 4: is a side view of the main frame;
- Fig. 5: is a perspective view of a head pipe unit of the main frame;
- Fig. 6: is a perspective view of the head pipe unit;
- Fig. 7: is a perspective view of a joint of a rear arm bracket of the main frame, in particular of the rear arm brackets in their upper ends;
- Fig. 8: is a sectional front view of a head pipe of the head pipe unit;
- Fig. 9: is a sectional view of the head pipe unit taken along the line IX-IX in Fig. 4, in particular of a gusset of the head pipe unit;
- Fig. 10: is a front view of a connecting portion of a down tube of the head pipe unit;
- Fig. 11: is a sectional view of the down tubes taken along the line Xl-Xl in Fig. 10;
- Fig. 12: is a bottom view of a linking part or connecting portion of a cross pipe with the rear arm bracket;
- Fig. 13: is a rear view of the rear arm brackets;
- Fig. 14: is a side view of a motorcycle comprising a main frame according to a second embodiment of the present invention;
- Fig. 15: is a front view of a connecting portion of a down tube of the main frame;
- Fig. 16: is a sectional view of a first reinforcing member of the main frame taken along the line XVI-XVI in Fig. 15;
- Fig. 17: is a side view of a motorcycle comprising a main frame according to a third embodiment of the present invention;
- Fig. 18: is a front view of a connecting portion of a down tube of the main frame;
- Fig. 19: is a sectional view of the down tube taken along the line XIX-XIX in Fig. 18; and
- Fig. 20: is a sectional view showing an example of variation of the head pipe unit.

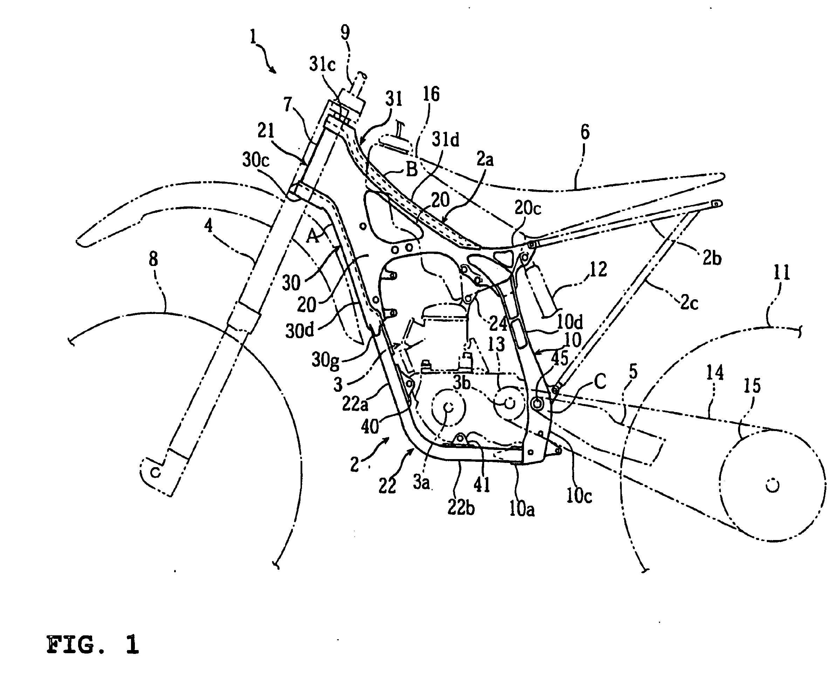

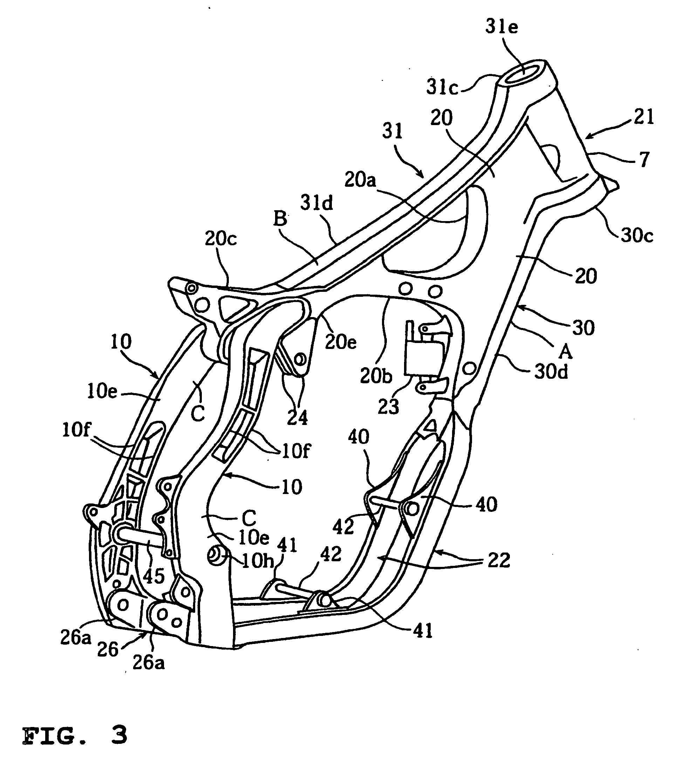

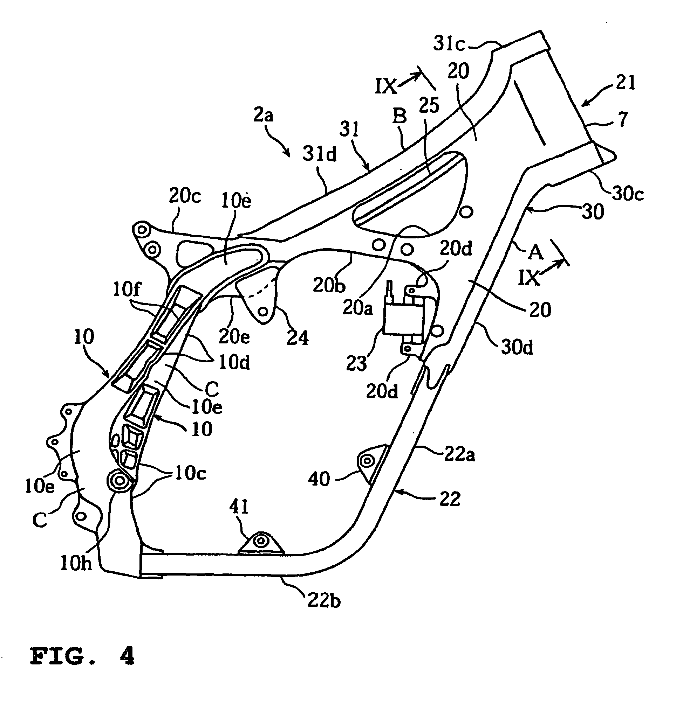

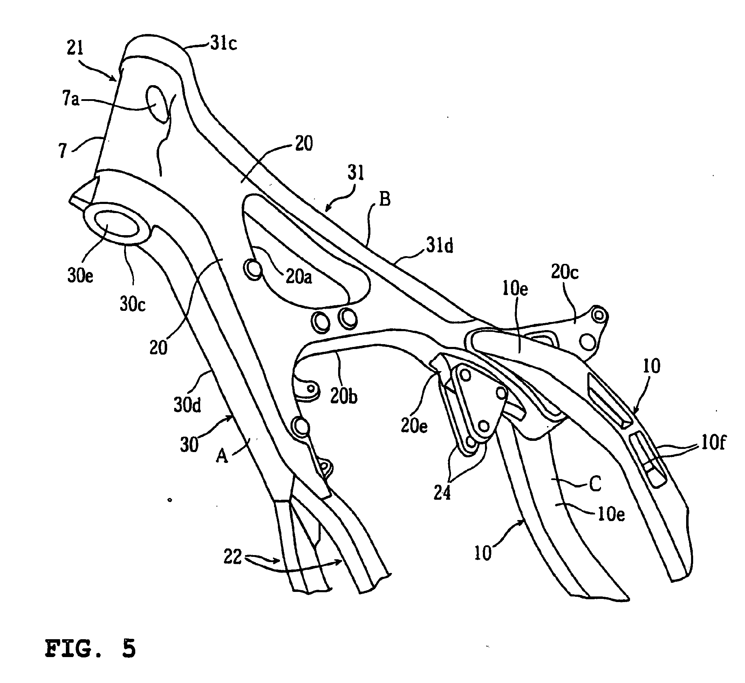

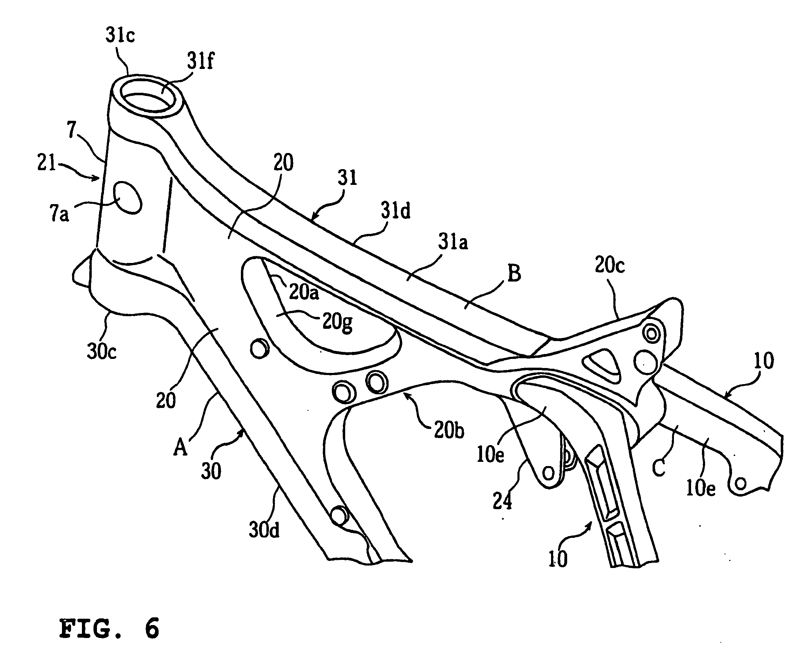

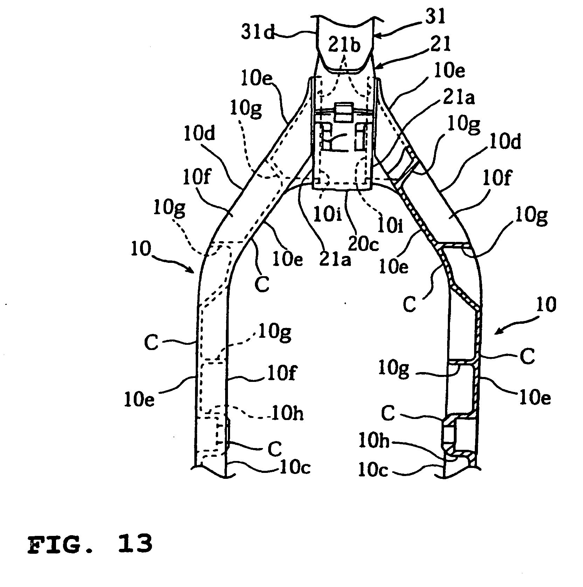

Figs. 1 through 13 are explanatory views of a motorcycle having a body frame according to an embodiment (first embodiment) of the present invention. Fig. 1 is a side view of the motorcycle. In the figures, the terms front and rear as well as right and left as used herein are meant as viewed from a rider seated on the motorcycle.

In Fig. 1, a reference numeral 1 denotes a motorcycle, preferably being a motocross motorcycle, having a body frame 2, on which an engine unit 3 is mounted, including a main frame 2a for supporting a front fork 4 and rear arms 5, as well as a seat rail 2b and a seat pillar 2c for supporting a seat 6.

The front fork 4 is pivotally supported by a head pipe 7 attached to the front end of the main frame 2a, allowing the front fork to be steered left and right. The front fork 4 has a front wheel 8 pivotally supported at its lower end while having steering handle bars 9 fixed at its upper end. The rear arms 5 are pivotally supported for up-down swinging by left and right rear arm rackets 10, 10 attached to the rear end of the main frame 2a. A rear wheel 11 is pivotally supported at the rear ends of the rear arms 5.

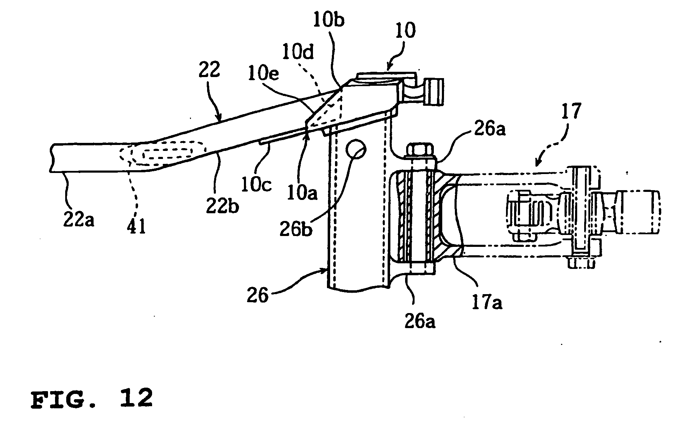

A rear suspension is disposed between the rear arms 5 and the main frame 2a. The rear suspension allows the rear arms 5 and the lower rear end of the main frame 2a to be linked to each other via a linkage 17 (see Fig. 12) while allowing the linkage 17 and the upper rear end of the main frame 2a to be linked to each other via a cushion unit 12.

In a cradle formed with the main frame 2a, the horizontal engine unit 3 is mounted with its crankshaft 3a oriented in a vehicle width direction.

The engine unit 3 has a drive sprocket 13 fixed to its output shaft 3b. The drive sprocket 13 is connected to a driven sprocket 15 of the rear wheel 11 via a chain 14. Above the engine unit 3 or on the top of the main frame 2a, a fuel tank 16 is mounted. The seat 6 is mounted at the rear of the fuel tank 16.

The main frame 2a comprises a head pipe unit 21 including the head pipe 7, upper and lower gussets 20, 20 extending obliquely downward while widening to the rear of the vehicle from the head pipe 7, a pair of left and right down tubes 22, 22 extending obliquely downward from the lower end of the lower gusset 20 toward the rear of the vehicle, the left and right rear arm brackets 10, 10 interposed between the rear ends of the respective down tubes 22 and the rear end of the upper gusset 20, and a cross pipe 26 for connecting the lower ends of the rear brackets 10 to each other.

The head pipe unit 21 is made up of casting products such as AC4CH-T6. The left and right down tubes 22 are made up of extrusions such as A7NO1-T6. The left and right rear arm brackets 10, the seat rail 2b and the seat pillar 2c are forging products such as A7NO1-T6.

The head pipe unit 21 is shaped like a hollow box having a pair of left and right vertical walls 21 a, 21 a with its front and rear end faces closed as well as its upper and lower end faces opened. The head pipe 7 includes the arcuate-shaped front end of the left and right vertical walls 21 a. The upper and lower gussets 20 have the left and right vertical walls 21 a, 21 a extending obliquely downward in parallel with each other while widening to the rear of the vehicle from the head pipe 7. An angular cylindrical tension pipe (connecting portion) 20b is formed integrally with the upper and lower gussets 20 to connect their rear portions to each other.

This results in an approximately triangular hole 20a formed at the rear of the upper and lower gussets 20, 20. The inner periphery of the hole 20a is closed by an inner periphery wall 20g.

A rear cushion bracket 20c formed integrally with the upper rear end of the upper gusset 20 extends obliquely upward. The upper end of the cushion unit 12 is pivotally supported with the rear cushion bracket 20c to which the front end of the seat rail 2b is connected.

A pair of upper and lower supporting pieces 20d protruding rearward are integrally formed with a rear wall 20f of the tension pipe 20b. An ignition coil 23 is attached between the supporting pieces 20d, 20d. An engine supporting portion 20e integrally formed with the undersurface of the rear cushion bracket 20c of the upper gusset 20 protrudes therefrom. The upper end of the engine unit 3 is supported via an engine bracket 24 fastened to the supporting portion 20e with bolts. A recess 7a is provided on the left side of the head pipe 7 to receive a head pipe of a wire cable 25 for clutch, brake, throttle and the like.

Reinforcing members are provided for plural portions of the main frame 2a that require high strength against shock load transmitted from the road surface. In other words, the head pipe unit 21 has a down frame member 30 at its lower edge as a first reinforcing member, and a tank rail member 31 at its upper edge as a second reinforcing member. The left and right rear arm brackets 10 are made up of the third reinforcing members. The down frame member 30, the tank rail member 31 and the rear arm brackets 10 are each made up of a casting product such as A7N01-T6.

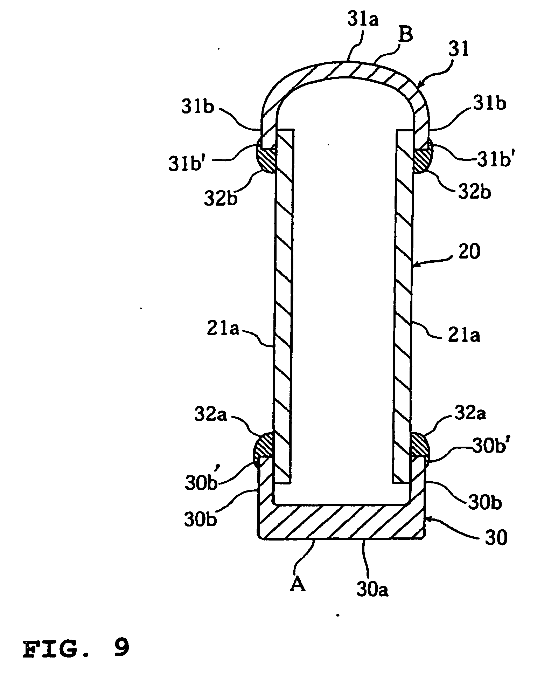

As shown in Fig. 9, the down frame member 30 and the tank rail member 31 mainly have their respective connecting walls 30a, 31 a, which extend like a band respectively along the undersurface and the top surface of the head pipe unit 21, and left and right sidewalls 30b, 31b, which obliquely extend from the opposite edges of the connecting walls 30a, 31 a. Each space created by the connecting wall and the sidewalls is opened outward.

The down frame member 30 is formed into an U-shape in cross-section with the respective corners made by the connecting wall 30a, and the respective sidewalls 30b approximately perpendicular to each other. The down frame member includes a lower head 30c for covering the undersurface of the head pipe 7, and a down frame 30d extending from the lower head 30c along the undersurface of the gusset 20.

The down frame member 30 has the connecting wall 30a formed thicker toward the lower head 30c and thinner toward the lower end of the down frame 30d. The down frame member 30 includes the connecting wall 30a which closes the opening on the undersurface of the head pipe unit 21, and the left and right sidewalls 30b attached to the outer side of the vertical walls 21 a. The left and right sidewalls 30b have the edges 30b' rigidly jointed to the vertical walls 21 a via build-up welds 32a.

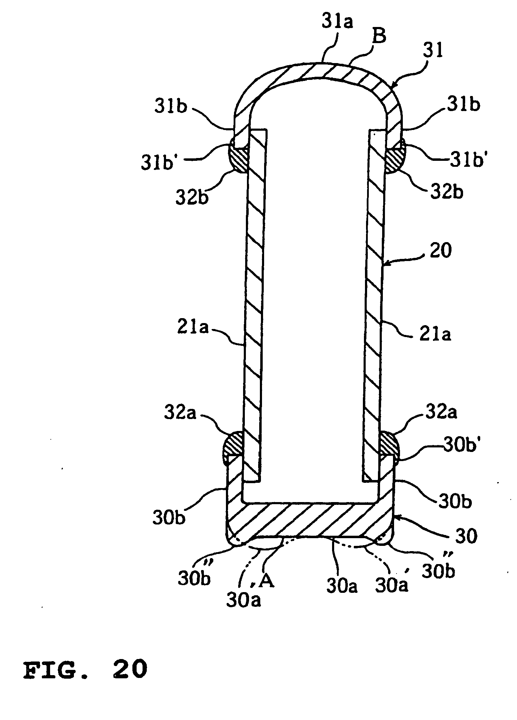

The U-shaped down frame member has small circular corners on each side to avoid stress concentration. The down frame 30d may adopt various shapes for its end. They include, for example as shown in Fig. 20, a slightly-protruding base end 30b" of the sidewall 30b from the connecting wall 30a, and as shown by the dashed lines in Fig. 20, the arc-shaped projection 30a' on the outer side of the connecting wall 30a.

The tank rail member 31 is generally formed into an C-shape in cross-section by connecting the connecting wall 31 a with the left and right sidewalls 31 b. The tank rail member includes an upper head 31 c for covering the top surface of the head pipe 7, and tank rail 31 d extending from the upper head 31 c along the top surface of the upper gusset 20. The fuel tank 16 is mounted across the tank rail 31 d. The fuel tank 16 has a tunnel-like recess (not shown) at its bottom through which the tank rail 31 d can be inserted. The C-shaped tank rail 31 d allows increase in fuel capacity of the fuel tank 16.

The tank rail member 31 has the connecting wall 31 a formed thicker toward the upper head 31 c and thinner toward the rear end of the tank rail 31 d. The tank rail member 31 includes the connecting wall 31 a which closes the opening on the top surface of the head pipe unit 21, and the left and right sidewalls 31 b attached to the outer side of the vertical walls 21 a. The left and right sidewalls 31 b have the lower edges 31 b' rigidly jointed to the vertical walls 21 a via build-up welds 32b. The head pipe unit 21 has its upper and lower openings closed by the tank rail member 31 and the down frame member 30, respectively, while being supported by said members 31, 30.

The down frame member may adopt the same shape in cross-section as that designed for the tank rail member, while the tank rail member may adopt the same shape in cross-section as that designed for the down frame member.

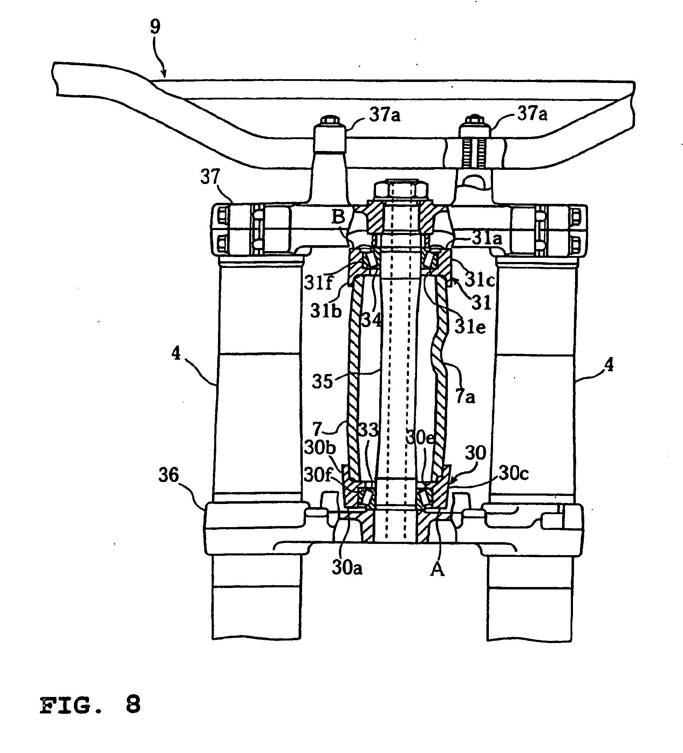

The upper and lower heads 31 a, 30a, as shown in Fig. 8, are provided with steering shaft through holes 31e, 30e, respectively, in which bearing seats 31f, 30f each having a diameter larger than those of said through holes 31 e, 30e are formed in a stepped manner. Bearings 34, 33 are attached to their respective bearing seats 31f, 30f. A steering shaft 35 inserted into the head pipe 7 is supported by the bearings 34, 33.

The left and right front forks 4, 4 are fixed to the steering shaft 3 via upper and lower brackets 37, 36. The steering handlebars 9 are fixed to the upper bracket 37 via handlebar crowns 37a, 37a.

The down frame member 30 is provided such that the external face A of the connecting wall 30a is positioned in a portion of the head pipe unit 20 that requires high strength, that is, on the side where highest stress occurs. In other words, the external face A is oriented to face outward (downward) when viewed in cross-section. The tank rail member 31 is in turn provided such that the external face B of the connecting wall 31 a is positioned in a portion of the head pipe unit 20 that requires high strength, that is, on the side where the highest stress occurs. In other words, the external face B is oriented to face outward (upward).

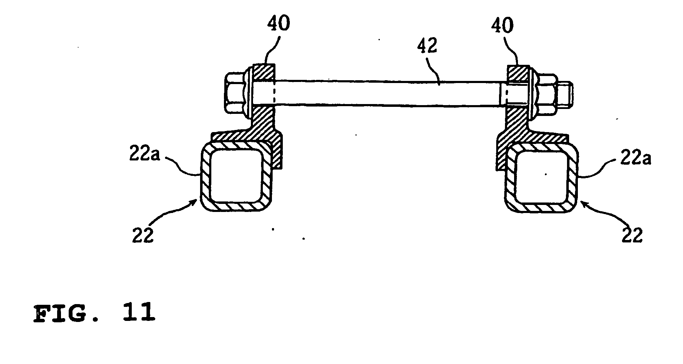

The left and right angular cylindrical down tubes 22, 22 have tilting portions 22a continued from the lower end of the down frame 30d of the down frame member 30, which obliquely extend downward separately to the left and right, and horizontal portions 22b extending rearward from the lower end of the tilting portions 22a approximately in the horizontal direction. The tilting portions 22a have a pair of left and right engine brackets 40. The horizontal portions 22b also have a pair of left and right engine brackets 41. These engine brackets are individually jointed to each corresponding portion by welding. The engine unit 3 has the front wall and connecting wall which are supported via supporting bolts 42 fastened across the left and right engine brackets 40, 41 (see Fig. 11).

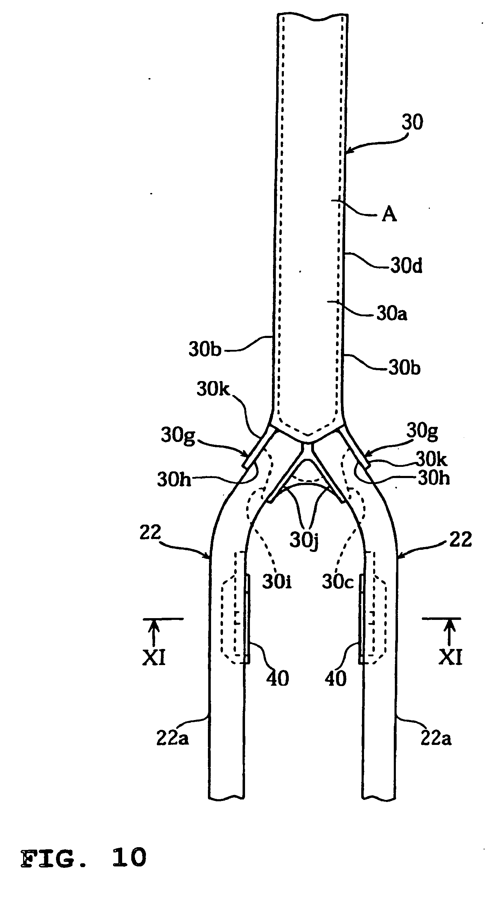

The lower end of the down frame 30d is separated into two portions, left and right receiving portions 30g, 30g, which are formed integral therewith. As shown in Fig. 10, the receiving portions 30g have mounting openings 30h facing forward of the vehicle, which include a rear piece 30i, left and right inner pieces 30j, 30j, and left and right outer pieces 30k, 30k.

Left and right (lower) receiving portions 10a are formed at the lower ends of the left and right rear arm brackets 10. As shown in Fig. 12, each receiving portion 10a has a mounting opening 10b facing forward of the vehicle, which includes an inner piece 10c, and upper and lower pieces 10d, 10e. The left and right down tubes 22 have the horizontal portions 22b with their rear ends attached, from the front of the vehicle, to the receiving portions 10a of the rear arm brackets 10, as well as the tilting portions 22a with their front ends attached, from the front of the vehicle, to the receiving portions 30g of the down frame 30d. Said rear and front ends are welded to the respective receiving portions 10a, 30g.

The lower ends of the left and right rear arm brackets 10 are welded to each other via the angular cylindrical cross pipe 26 made of aluminum extrusion extending in the vehicle width direction. A pair of left and right bosses 26a, 26a protruding rearward of the vehicle are formed integrally with the rear wall of the cross pipe 26. The link arms 17a of the linkage 17 are rotatably supported by the left and right bosses 26a (see Fig. 12).

A work hole 26b is formed through a portion to receive a fastening bolt (not shown) for change pedals on the cross pipe 26. Inserting a fastening tool (not shown) into the work hole 26b from below the vehicle to loosen the fastening bolt allows adjustments in angle to mount the change pedals (not shown).

Each of the left and right rear arm brackets 10 is made up of the third reinforcing member, which is a casting product. Said rear arm brackets include, as a unit, lower half portions 10c extending approximately vertically upward from the left and right down tubes 22, when viewed in the longitudinal direction of the vehicle, and upper half portions 10d extending obliquely inward in the vehicle width direction from the upper ends of the lower half portions 10c.

The left and rear arm brackets 10 are individually formed into an approximately U-shape in cross-section, each including the connecting wall 10e extending in the vertical direction generally like a band, and the front and rear sidewalls 10f, 10f obliquely extending from the front and rear edges of the connecting wall 10e, respectively. Plural ribs 10g are integrally formed at predetermined intervals in the longitudinal direction between the connecting wall 10e and each of said sidewalls 10f.

The middle of the lower half portion 10c in the vertical direction is provided with a cylindrical recess 10h protruding inward of the vehicle from the connecting wall 10e. A pivot shaft 45 fastened between the left and right recesses 10h allows the rear arms 5 to swing up and down.

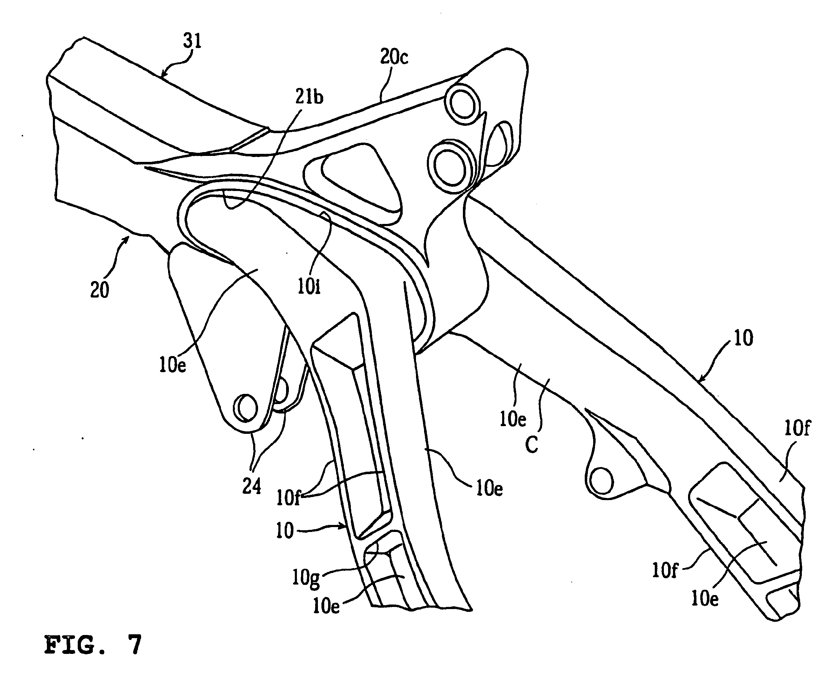

The connecting wall 10e is provided outer side of each upper half portion 10d at its upper end where a ring flange 10i is provided (see Fig. 7). The vertical walls 21 a of the upper gusset 20 provide a recess 21 b into which said flange 10i is attached. The outer periphery of said flange 10i is welded to the vertical wall 21 a. Thus, a connecting portion of the rear arm brackets 10, that is, the upper ends of the rear arm brackets 10 with the upper gusset 20 has a closed cross-section.

Each of the left and right rear arm brackets 10 has the connecting wall 10e with its external face C facing inner side of the vehicle on its upper half portion 10d, and said connecting wall 10e with its external face C facing outer side of the vehicle on its lower half portion 10c. The flanges 10i are provided such that the connecting wall has the external face C facing outer side of the vehicle. This allows the curved portion of each upper half portion 10d to have the connecting wall with its external face C positioned in a portion of the rear arm bracket 10 that requires high strength, that is, on the side where the highest stress occurs. Each of the recesses 10h has the connecting wall with its external face C facing inner side of the vehicle.

Description will next be made of functions and effects of the embodiment of the present invention.

In the body frame of the embodiment of the present invention, the head pipe unit 21 has the down frame member 30, which is a forging product formed into a U-shape in cross-section, jointed to the lower edge of the lower gusset 20, and the tank rail member 31, which is a forging product formed into a C-shape in cross-section, jointed to the upper edge of the upper gusset 20, in a portion that requires high strength. Each of said members 30, 31 has the connecting wall with its external face A or B facing outward in a portion of the head pipe unit 21 that requires high strength, that is, on the side where the highest stress occurs. This allows shock load transmitted from the road surface to be received by the down frame member 30 and the tank rail member 31, so that the head pipe unit 21 can ensure rigidity and strength for its portion that requires high strength.

This accordingly allows the upper and lower gussets 20, 20 to have openings on its top surface and undersurface, resulting in weight reduction of the head pipe unit 21 and facilitated forging process thereof.

More specifically, the down frame member 30 includes the lower head 30c jointed to the undersurface of the head pipe 7, and the down frame 30d extending from the lower head 30c along the lower edge of the lower gusset 20. This therefore ensures rigidity and strength against shock load acting on the lower-face connecting portion of the head pipe 7 to the lower gusset 20. In other words, the motorcycle jumps down from high places to the road surface, which causes the front and rear wheels 8, 11 to rebound. This results in high tensile load applied adjacent to the connecting portion of the head pipe 7 to the lower gusset 20, which may be received by the high-strength down frame member 30.

The down frame member 30 is formed into a U-shape in cross-section, allowing an increase in cross-section of the connecting wall 30a, and accordingly an increase in section module as well as a decrease in tensile stress.

The lower head 30c is provided with bearing seats 30f so that the high-strength down frame member 30 can support a front fork 4, thereby enhancing rigidity and strength for supporting the front fork 4.

The tank rail member 31 includes the upper head 31 c jointed to the top surface of the head pipe 7, and the tank rail 30d extending from the upper head 31 c along the upper edge of the upper gusset 20. This can ensure rigidity and strength for load applied to the upper-face connecting portion of the head pipe 7 to the upper gusset 20. In other words, as described above, the motorcycle jumps down, which causes the front and rear wheels 8, 11 to rebound. This results in compression load acting on the upper-face connecting portion of the head pipe 7 to the upper gusset 20, which may be received by the tank rail member 31. The head pipe unit 21 is interposed between the down frame member 30 and the tank rail member 31, thereby enhancing rigidity and strength of the entire head pipe unit 21.

The down frame member 30 and the tank rail member 31 are disposed such that the connecting walls have the external faces A, B facing outer side of the vehicle, while the sidewalls 30b, 31 b are attached to the outer side of the vertical walls 21 a. The sidewalls 30b, 31 b have the edges 30b' 31 b' jointed to the vertical walls 21 a via build-up welds. This can ensure welding strength of the down frame member 30 and the tank rail member 31 to the head pipe unit 21. The welded portions of the down frame member 30 and the tank rail member 31 are apart from the external faces A, B of the connecting walls. This can prevent the highest stress from acting on the welded portions.

In the embodiment of the present invention, the upper and lower gussets 20 have the angular cylindrical tension pipe 20b formed at their rear ends, the rear cushion bracket 20c extending obliquely upward toward the rear, a pair of supporting pieces 20d, and the engine supporting portion 20e, all formed integrally as a unit. This can reduce the frame weight as well as the number of components and the costs.

In the embodiment of the present invention, the left and right rear arm brackets 10 are made up of the third reinforcing members, which are forging products. Also each of the rear arm brackets 10 has the connecting wall with its external face C provided on the side where the highest stress occurs. This can ensure rigidity and strength against shock load transmitted from the road surface. In other words, the recesses 10h for pivotably supporting the rear arms 5 have each connecting wall with its external face C facing inner side of the vehicle. This therefore ensures rigidity and strength against shock load applied from the rear wheel 11 via the rear arms 5. The plural ribs 10g are integrally formed at predetermined intervals between the connecting wall 10e, and the front and rear sidewalls 10f, enhancing rigidity and strength of the entire rear arm brackets.

In the described embodiment, the left and right rear arm brackets 10 have the upper half portions 10d obliquely extending inward to the center or the upper gusset 20 from the left and right down tubes 22, 22 provided with a sufficient interval therebetween. Also, the upper gusset 20 has the rear cushion 12 connected to its rear end. High shock load resulted from the motorcycle jumping down to the road surface from high places is applied to the obliquely-extending upper half portion 10d in the direction that it is pulled up. Accordingly, high tensile load acts on the upper half portion 10d on its inner side of the vehicle. In the described embodiment, the connecting wall 10e has the external surface C facing inner side of the vehicle so that the high tensile load may be received.

Each lower half portion 10c has the connecting wall with its external face C facing outer side of the vehicle. This allows a rider to avoid discomfort when holding the lower half portions 10c between his/her legs.

The lower ends of the left and right rear arm brackets 10 are connected to each other via the angular cylindrical cross pipe 26 made of aluminum extrusion. The work hole 26b is formed through a portion to receive the fastening bolt for the change pedals on the cross pipe 26. This ensures a required strength of the cross pipe 26 while reducing the weight thereof. Furthermore, this can facilitate the adjustments in angle to mount the change pedals.

In the described embodiment, the head pipe unit 21 comprises: the down frame member 30, as the first reinforcing member, jointed along its undersurface; the tank rail member 31, as the second reinforcing member, jointed along its top surface; and the rear arm brackets 10 as the third reinforcing member. Therefore, a portion of the main frame 2a that requires highest strength is generally enclosed by said three types of reinforcing members, which reduces the frame weight while further enhancing rigidity and strength of the entire main frame 2a.

In the described embodiment, the down frame member 30 has the receiving portions 30g separated into two each provided with the mounting opening 30h facing forward of the vehicle. Each of the left and right rear arm brackets 10 has, at its lower end, the receiving portion 10a including the mounting opening 10b facing forward of the vehicle. Each down tube 22 has the horizontal portion 22b welded, from the front of the vehicle, to the receiving portion 10a of the rear arm bracket 10, as well as the tilting portion 22a welded, from the front of the vehicle, to the receiving portion 30g of the down frame 30d. This allows further accurate and easy assembly of the down tube 22, enhancing workability.

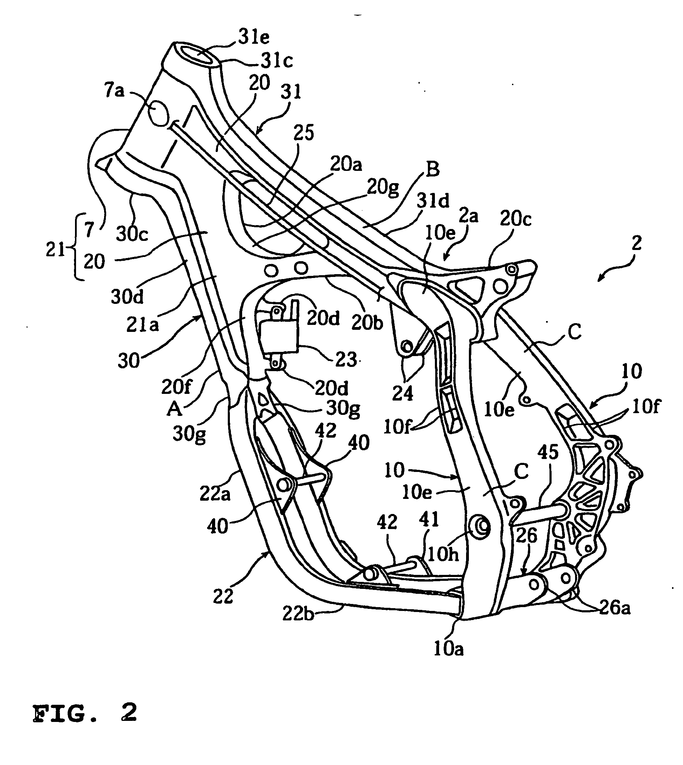

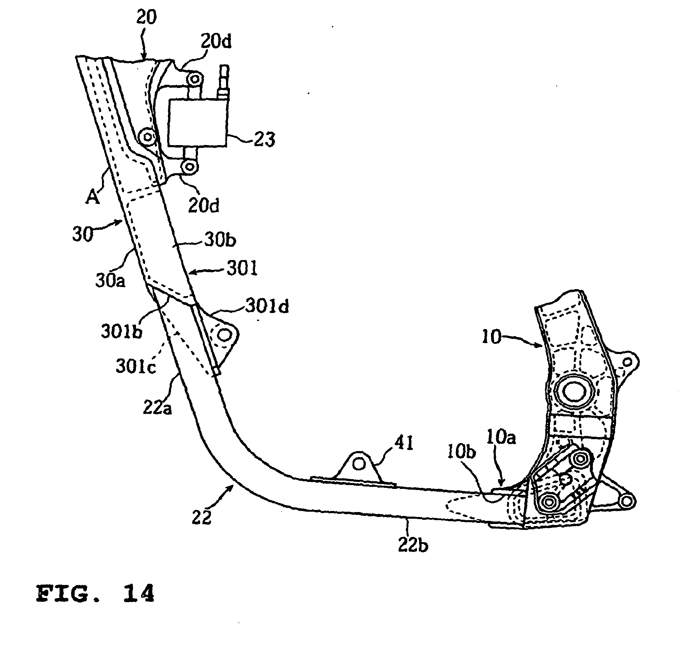

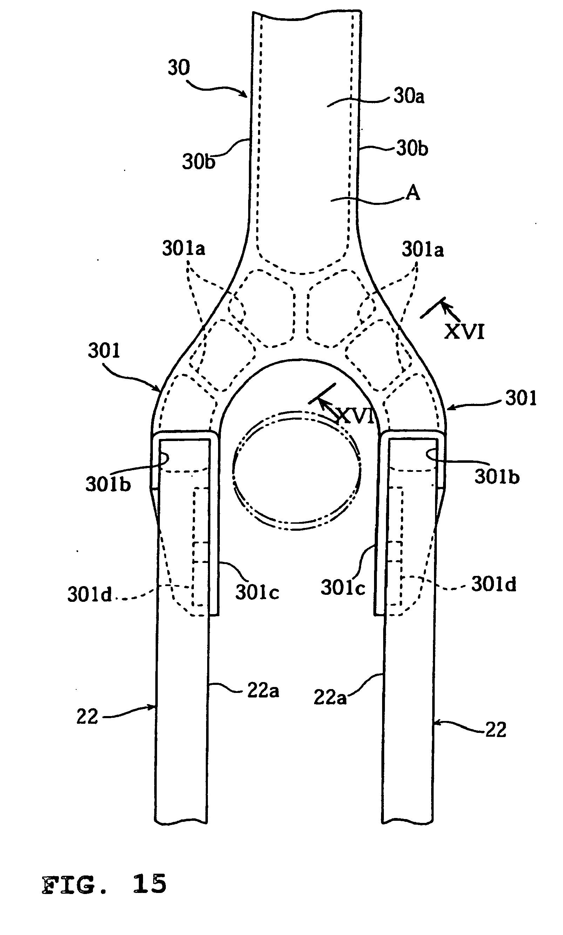

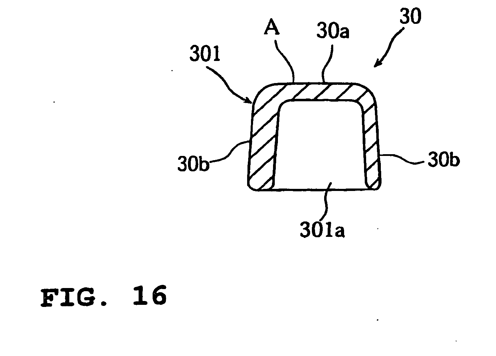

Figs. 14 through 16 are explanatory views of a body frame according to a second embodiment. In the drawings, the same reference numerals as those in Figs. 2 and 10 show the same parts or equivalent parts.

In the second embodiment, a down frame member 30 is separated from its lower end into left and right extending portions 301 formed integrally therewith and continuously extending toward the rear of the vehicle.

Each extending portion 301 has plural ribs 301 a formed integrally between the connecting wall 30a, and the left and right sidewalls 30b, 30b while having, at its lower end, a receiving portion 301 c including a mounting opening 301 b facing forward of the vehicle. An engine bracket 301d is formed integrally with each extending portion 301.

Left and right down tubes 22 each have a straight tilting portion 22a welded to the receiving portion 301 c.

In the second embodiment, the down frame member 30 is separated from its lower end into the left and right extending portions 301 formed integrally therewith and continuously extending toward the rear of the vehicle. Accordingly, this can further enhance the frame strength by said extending portions 301. The engine brackets 301d are formed integrally with the extending portions 301, reducing the number of components.

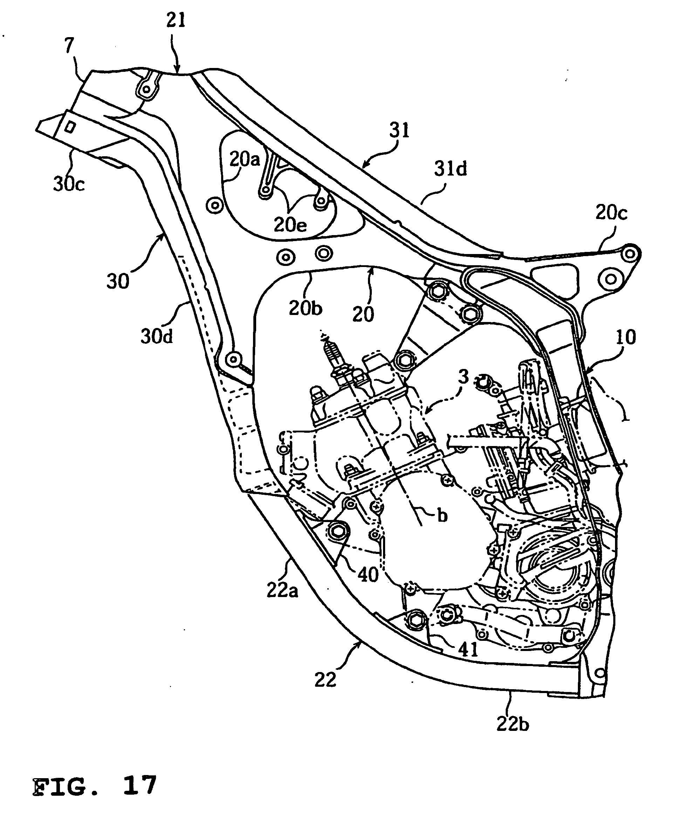

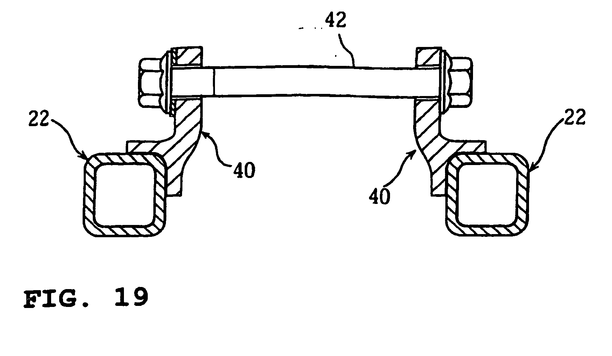

Figs. 17 through 19 are explanatory views of a body frame according to a third embodiment. In the drawings, the same reference numerals as those in Figs. 2 and 10 show the same parts or equivalent parts.

The third embodiment of the present invention illustrates that a down frame member 30 has an approximately sector-shaped reinforcing portion 302 formed integrally with its lower end, and said reinforcing portion 302 is provided with a pair of left and right receiving portions 302a. The center of the reinforcing portion 302 is displaced from the vehicle center line "a" toward one side in the vehicle width direction. An engine unit 3 is mounted along a cylinder axis "b" tilting toward the front of the vehicle.

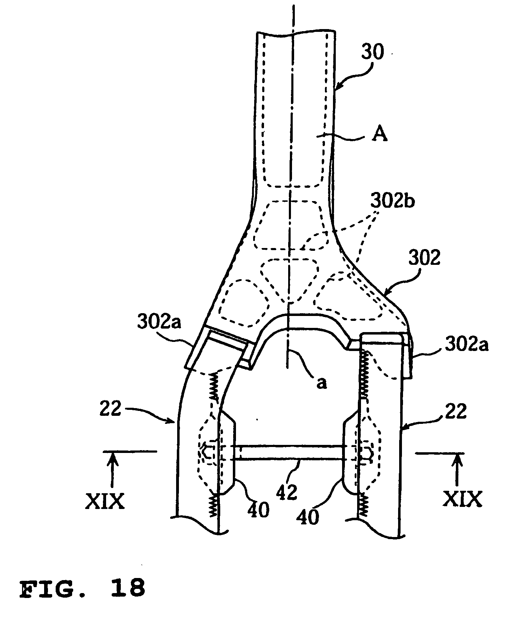

The reinforcing portion 302 has approximately triangular ribs 302b formed integrally with a connecting wall 30a, and left and right sidewalls 30b. The tilting portions 22a of the down tubes 22 are welded to each receiving portion 302a. As shown in Fig. 18, the upper end of the left down tube 22 is bent inward of the vehicle while the right down tube 22 is formed into a straight line. A gusset 20 has a supporting piece 20d for supporting engine auxiliaries formed integrally with the inside of the hole 20a.

In the third embodiment, a first reinforcing member 30 has a sector-shaped reinforcing portion 302 formed integrally with its lower end. Accordingly, this can further enhance the frame strength by said reinforcing portion 302.

As described above, in order to provide a motorcycle capable of ensuring rigidity and strength of a body frame thereof while reducing the vehicle weight and the manufacturing cost increase, a motorcycle is proposed, comprising a main frame 2a which has a down frame member (reinforcing member) 30, which is a forging product and formed into a U-shape in cross section, provided in its portion that requires high strength against shock load transmitted from a road surface or the undersurface of a head pipe unit 21, and including a connecting wall 30a and left and right sidewalls 30b extending from the opposite edges of the connecting wall 30a such that the connecting wall 30a has an external face A positioned in said portion that requires high strength, that is, on the side where highest stress occurs.

## Claims

1. Motorcycle having a body frame (2) including a main frame (2a) with head pipe unit (21) comprising a head pipe (7) for supporting a front fork (4) and a gusset (20), wherein a second reinforcing member (31) extending obliquely downward from a top of the head pipe (7) toward a rear of the motorcycle and a first reinforcing member (30) extending downward from a bottom of the head pipe (7), further a pair of left and right down tubes (22) extending toward the rear of the motorcycle (1), and wherein third reinforcing members (10) are interposed as a pair of left and right rear arm brackets across rear ends of the left and right down tubes (22) and the rear end of the gusset (20) and/or of the upper reinforcing member (31) and connecting them to each other for supporting the at least one rear arm (5) for up-down swinging, and wherein the left and right members (10) are connected to each other via a cross pipe (26) extending in the motorcycle width direction,
wherein
said reinforcing members (10,30,31) are forging products, provided at a portion of the main frame (2a) that requires high strength against shock loads, and said head pipe unit (21), tubes (22) and cross pipe (26) are non-forging products.

2. Motorcycle according to claim 1, **characterized in that** the gusset (20) comprises upper and lower gussets (20) extending obliquely downward, in particular while widening to the rear of the motorcycle (1) from the head pipe (7).

3. Motorcycle according to claim 2, **characterized in that** the left and right down tubes (22) are connected to a lower end of the lower gusset (20) and extending downwardly toward the rear of the motorcycle (1).

4. Motorcycle according to at least one of the claims 1 to 3, **characterized in that** the head pipe unit (21) or a portion thereof, such as the upper and lower gusset (20), the head pipe (7), and/or the connecting portion (20b), are casting products.

5. Motorcycle according to at least one of the claims 1 to 4, **characterized in that** the right and left down tubes (22) and/or a cross pipe (26), are made of extrusion products.

6. Motorcycle according to at least one of the claims 1 to 5, **characterized in that** said reinforcing members (10,30,31) comprises a pair of side walls (10f,30b,31b) and a connecting wall (10e,30a,31a) for connecting said side walls (10f,30b,31b), said walls (10e,10f,30a,30b,31a,31b) forming an outwardly open space between inner faces thereof and **in that** an external face (A,B,C) of the connecting wall (10e,30a,31a) in cross-section is positioned in said portion of the main frame (2a) that requires high strength on a side where highest stress occurs in cross-section of the main frame (2a).

7. Motorcycle according to at least one of the claims 2 to 6, **characterized in that** the first reinforcing member comprises a down frame member (30) having a lower head (30c) connected to a lower end of the head pipe (7) and a down frame (30d) extending from the lower head (30c) along a lower edge of the lower gusset (20), said down frame (30d) covering the lower edge of the lower gusset (20) from below and having the connecting wall (30a) with its external face (A) facing downward and the sidewalls (30b) jointed to each lower edge of the lower gusset (20).

8. Motorcycle according to at least one of the claims 2 to 7, **characterized in that** the second reinforcing member comprises a tank rail member (31) having an upper head (31c) connected to an upper end of the head pipe (7) and a tank rail (31d) extending from the upper head (31c) along the upper edge of the upper gusset (20), said tank rail (31 d) covering the upper edge of the upper gusset (20) from above and having the connecting wall (31 a) with its external face (B) facing upward and the sidewalls (30b) jointed to each upper edge of the upper gusset (20).

9. Motorcycle according to claim 7 or 8, **characterized in that** said lower head (30c) of said down frame member (30) and/or said upper head (31c) of said tank rail member (31) comprises a bearing seat (30f,31f).

10. Motorcycle according to at least one of the claims 2 to 9, **characterized in that** the head pipe unit (21) has an opening at an undersurface of the lower gusset (20), and **in that** the down frame (30d) closes the opening at the undersurface of the lower gusset (20), the connecting wall (30a) with its external face (A) facing downward and the sidewalls (30b) being positioned at each edge of the opening at the undersurface, and wherein edges (30b') of said sidewalls (30b) are welded to the lower gusset (20).

11. Motorcycle according to at least one of the claims 2 to 10, **characterized in that** the head pipe unit (21) has an opening on a top surface of the upper gusset (20) and **in that** the tank rail (31 d) closes the opening on the top surface of the upper gusset (20), the connecting wall (31 a) with its external face (B) facing upward and the sidewalls (31b) being positioned at each edge of the opening of the top surface, and wherein edges (31 b') of said sidewalls (31 b) are welded to the upper gusset (20).

12. Motorcycle according to at least one of the claims 2 to 11, **characterized in that** a connecting portion (20b) is formed integrally with the head pipe unit (21) connecting rear portions of the upper and lower gussets (20) to each other.

13. Motorcycle according to at least one of the claims 2 to 12, **characterized in that** a rear cushion bracket (20c) is formed integrally with a rear end of the upper gusset (20) and extends therefrom.

14. Motorcycle according to at least one of the claims 1 to 13, **characterized in that** the third reinforcing members comprises a pair of left and right rear arm brackets (10), wherein a part of the connecting wall (10c) of each of said rear arm brackets (10) which is adjacent to the connecting portion (10i) with the tank rail (31d) has its external face (C) facing towards an inner side in a motorcycle width direction.

15. Motorcycle according to claim 14, **characterized in that** each of the left and right rear arm brackets (10) includes a lower half portion (10c) approximately vertically extending upward from the respective rear ends of the left and right down tubes (22) positioned with an interval in a motorcycle width direction when viewed in the longitudinal direction of the motorcycle (1), and an upper half portion (10d) obliquely extending inwardly in the motorcycle width direction from the lower half portion (10c) to a rear end of the tank rail (31d) positioned in a center of the motorcycle width direction, said upper half portion (10d) having its connecting wall (10e) with its external face (C) facing inside in the motorcycle width direction and said lower half portion (10c) having its connecting wall (10e) with its external face (C) facing outwardly.

16. Motorcycle according to at least one of claims 14 to 15, **characterized in that** a connecting portion (10i) of the rear arm brackets (10) to the tank rail (31d) is welded thereto such that the connecting wall (10e) has its external face (C) facing towards the outer side in the motorcycle width direction, said connecting portion (10i) with the tank rail (31d) having a closed cross-section.

17. Motorcycle according to at least one of the claims 14 to 16, **characterized in that** the lower ends of the left and right rear arm brackets (10) are connected to each other via, a preferably angular cylindrical, cross pipe (26) extending in the motorcycle width direction, wherein preferably a work hole (26b) is formed through a portion thereof to receive a fastening bolt for changing pedals on the cross pipe (26).

18. Motorcycle according to at least one of the claims 7 to 17, **characterized in that** the down frame (30) has, at its lower end, a receiving portion (30) provided with a mounting opening (30h) facing forward with respect to the motorcycle, and/or each of the left and right rear arm brackets (10) has, at its lower end, a receiving portion (10a) provided with a mounting opening (10b) facing forward, and/or each of the left and right down tubes (12) has its rear end attached to the receiving portion (10a) of the rear arm bracket (10) from the front of the motorcycle, and its front end attached to the receiving portion (30g) of the down frame (30) from the front of the motorcycle, said ends being preferably welded to the respective receiving portions (30,10a).

## Patentansprüche

1. Motorrad, das einen Gestellrahmen (2) hat, der einen Hauptrahmen (2a) mit einer Gabelkopfeinheit (21) beinhaltet, aufweisend einen Gabelkopf (7) um eine Frontgabel (4) um ein Knotenblech (20) zu stützen, wobei ein zweites Verstärkungsteil (31) schräg nach unten von einer Spitze des Gabelkopfes (7) zu einer Rückseite des Motorrades sich erstreckt und ein erstes Verstärkungsteil (30) sich abwärts von einer Unterseite des Gabelkopfes sich erstreckt, weiterhin ein Paar linker und rechter Unterrohre (22), die sich zu der Rückseite des Motorrades (1) erstrecken und wobei dritte Verstärkungsteile (10) als ein Paar linker und rechter Hinterarmklammern dazwischen angeordnet sind hinseits der Hinterenden der linken und rechten Unterrohre (22) und dem Hinterende des Knotenblechs (20) und/oder des oberen Verstärkungsteiles (31) und diese miteinander verbindet, um den wenigstens einen Hinterarm (5) zum Abwärtsschwingen zu stützen, und wobei die linken und rechten Teile (10) miteinander verbunden sind über ein Querrohr (26), das sich in Querrichtung des Motorrades erstreckt, wobei die Verstärkungsteile (10, 30, 31) Schmiedeprodukte sind, die an einem Bereich des Hauptrahmens (2a) angeordnet sind, der eine hohe Festigkeit gegen Stoßkräfte erfordert, und die Gabelkopfeinheit (21), die Rohre (22) und das Querrohr (26) Nicht-Schmiedeprodukte sind.

2. Motorrad nach Anspruch 1, **dadurch gekennzeichnet, dass** das Knotenblech (20) ein oberes und unteres Knotenblech (20) enthält, die schräg nach unten gerichtet sind, insbesondere während sie von dem Gabelkopf (7) zu einer Rückseite des Motorrades sich erweitern.

3. Motorrad nach Anspruch 2, **dadurch gekennzeichnet, dass** die linken und rechten Unterrohre (22) an einem unteren Ende des unteren Knotenblechs (20) befestigt sind und sich nach unten zu der Rückseite des Motorrades sich erstrecken.

4. Motorrad nach wenigstens einem der Ansprüche 1 bis 3, **dadurch gekennzeichnet, dass** die Gabelkopfeinheit (21) oder ein Bereich davon wie beispielsweise das obere oder untere Knotenblech (20) der Gabelkopf (7) und/oder der Verbindungsbereich (20b) Gussteile sind.

5. Motorrad nach wenigstens einem der Ansprüche 1 bis 4, **dadurch gekennzeichnet, dass** die rechten und linken Unterrohre (22) und/oder ein Querrohr (26) aus Strangpressprodukten gefertigt sind.

6. Motorrad nach wenigstens einem der Ansprüche 1 bis 5, **dadurch gekennzeichnet, dass** die Verstärkungsteile (10, 30, 31) ein Paar Seitenwände (10f, 30b, 31b) und eine Verbindungswand (10e, 30a, 31a) zum Verbinden der Seitenwände (10f, 30b, 31 b) aufweisen, wobei die Wände (10e, 10f, 30a, 30b, 31 a, 31 b) eine nach außen offenen Bereich zwischen inneren Seiten bilden und dadurch dass eine äußere Seite (A, B, C) der Verbindungswand (10e, 30a, 31 a) im Querschnitt in dem Bereich des Hauptrahmens (2a) angeordnet ist, der eine hohe Festigkeit auf einer Seite, wo die höchste Belastung im Querschnitt des Hauptrahmens (2a) auftritt, benötigt.

7. Motorrad nach wenigstens einem der Ansprüche 2 bis 6, **dadurch gekennzeichnet, dass** das erste Verstärkungsteil ein Unterrahmenteil (30) aufweist, das einen unteren Kopf (30c) aufweist, der an einem unteren Ende des Gabelkopf (7) und des Unterrahmens (30d) befestigt ist, der von dem unteren Kopf (30c) sich entlang einer unteren Kante des unteren Knotenblechs (20) erstreckt, wobei der untere Rahmen (30d) die untere Kante des Knotenblechs (20) von unterhalb abdeckt und die Verbindungswand (30a) aufweist mit ihrer Außenseite (A) nach unten gerichtet und die Seitenwände (30b) an die jeweiligen untere Kante des unteren Knotenblechs (20) befestigt.

8. Motorrad nach wenigstens einem der Ansprüche 2 bis 7, **dadurch gekennzeichnet, dass** das zweite Verstärkungsteil ein Tankholmenteil (31) aufweist, das einen oberen Kopf (31 c) hat, der an einem oberen Ende des Gabelkopfes (7) und dem Tankholmen (31 d) befestigt ist, der von dem oberen Kopf (31 c) entlang der oberen Kante des oberen Knotenblechs (20) sich erstreckt, wobei der Tankholmen (31 d) die obere Kante des oberen Knotenblechs (20) von oberhalb abdeckt und die Verbindungswand (31a) hat, deren Außenseite (B) nach unten gerichtet ist und die Seitenwände jeweils an den oberen Kanten des oberen Knotenblechs (20) verbunden sind.

9. Motorrad nach den Ansprüchen 7 oder 8, **dadurch gekennzeichnet, dass** der untere Kopf (30c) des Unterrahmenteils (30) und/oder der obere Kopf (31 c) des Tankholmenteils (31) Lagersitze (30f, 31f) aufweist.

10. Motorrad nach wenigstens einem der Ansprüche 2 bis 9, **dadurch gekennzeichnet, dass** die Gabelkopfeinheit (21) eine Öffnung an einer Unterseite des unteren Knotenblechs (20) hat, und dadurch dass der Unterrahmen (30d) die Öffnung an der Unterseite des unteren Knotenblechs (20) schließt, wobei die Verbindungswand (30a) mit ihrer Außenseite (A) nach unten gerichtet ist und die Seitenwände (30b) an der jeweiligen Kante der Öffnungen der Unterseite angeordnet ist, wobei die Kanten (30b') der Seitenwände (30b) an das untere Knotenblech (20) angeschweißt sind.

11. Motorrad nach wenigstens einem der Ansprüche 2 bis 10, **dadurch gekennzeichnet, dass** die Gabelkopfeinheit (21) eine Öffnung auf einer Oberseite des oberen Knotenblechs (20) hat und dadurch dass der Tankholmen (31d) die Öffnung auf der Oberseite des oberen Knotenblechs (20) schließt, wobei die Verbindungswand (31a) mit ihrer Außenseite (B) nach oben gewandt ist und die Seitenwände an der jeweiligen Kante der Öffnung auf der Oberseite angeordnet sind, und wobei die Kanten (31b') der Seitenwände an das obere Knotenblech (20) angeschweißt sind.

12. Motorrad nach wenigstens einem der Ansprüche 2 bis 11, **dadurch gekennzeichnet, dass** ein Verbindungsbereich (20b) integral mit der Gabelkopfeinheit (21) verbunden ist, Rückbereiche der oberen und unteren Knotenbleche (20) miteinander verbindend.

13. Motorrad nach wenigstens einem der Ansprüche 2 bis 12, **dadurch gekennzeichnet, dass** eine Hinterkissenklammer (20c) einstückig mit einem rückwärtigen Ende des oberen Knotenblechs (20) ausgebildet ist und von diesen sich aus erstreckt.

14. Motorrad nach wenigstens einem der Ansprüche 2 bis 13, **dadurch gekennzeichnet, dass** das dritte Verstärkungsteil ein Paar linke und rechte Rückarmklammern (10) aufweist, wobei ein Teil der Verbindungswand (10c) der jeweiligen Rückarme (10), die benachbart zu dem Verbindungsbereich (10i) mit dem Tankholmen (31d) ist, seine Außenwand (C) in Richtung einer Innenseite im Querrichtung des Motorrads gerichtet hat.

15. Motorrad nach Anspruch 14, **dadurch gekennzeichnet, dass** jede der linken und rechten Rückarmklammern (10) einen unteren Halbbereich (10c) beinhaltet, der ungefähr vertikal sich von den entsprechenden rückwärtigen Enden der linken und rechte Unterrohre (22) nach oben erstreckt, angeordnet mit einem Intervall in Querrichtung des Motorrads in Längsrichtung des Motorrads gesehen, und einen oberen Halbbereich (10d), der schräg sich nach innen in Querrichtung des Motorrads von dem unteren Halbbereich (10c) zu einem rückwärtigen Ende des Tankholmen (31 d) sich erstreckt, angeordnet in einer Mitte der Querrichtung des Motorrads, wobei der obere Halbbereich (10d) seine Verbindungswände (10e) mit seiner Außenseite (C) nach innen in Querrichtung des Motorrads gerichtet hat und wobei der untere Halbbereich (10c) seine Verbindungswand (10e) mit seiner Außenwand (C) nach außen gerichtet hat.

16. Motorrad nach wenigstens einem der Ansprüche 14 bis 15, **dadurch gekennzeichnet, dass** ein Verbindungsbereich (10i) der Rückarmklammern (10) an den Tankholmen (31d) gespeist ist, derart, dass die Verbindungswand (10e) seine Außenseite (C) in Richtung der Außenseite in Querrichtung des Motorrades hat, wobei die Verbindungswand (10i) mit dem Tankholmen (31d) ein geschlossenes Profil hat.

17. Motorrad nach wenigstens einem der Ansprüche 14 bis 16, **dadurch gekennzeichnet, dass** die unteren Enden der linken und rechten Rückarmklammern (10) miteinander verbunden sind mittels eines eckigzylindrischen Querrohres (26), das sich in der Richtung des Motorrades erstreckt, wobei vorzugsweise eine Arbeitsöffnung (26b) durch einen Bereich davon gebildet ist, einen Verbindungsbolzen aufzunehmen, um Pedalen auf dem Querrohr (26) zu wechseln.

18. Motorrad nach wenigstens einem der Ansprüche 7 bis 17, **dadurch gekennzeichnet, dass** der Unterrahmen (30) an seinem unteren Ende einen Aufnahmebereich (30) hat, der mit einer Lageröffnung (30h) versehen ist, die bezüglich des Motorrades nach vorne gerichtet ist, und wo jeder der linken und rechten Rückarmklammern (10) an ihrem unteren Ende einen Aufnahmebereich (10a) hat, das mit einer Lageröffnung (10b) gebunden ist, die nach vorne gerichtet ist, und wo jeder der linken und rechten Rückarmklammern (10) an ihrem unteren Ende einen Aufnahmebereich (10a) hat, das mit einer Lageröffnung (10b) gebunden ist, die nach vorne gerichtet ist, und/oder jede der linken und rechten Unterrohre (12) sein rückwärtiges Ende mit dem Aufnahmebereich (10a) der Rückarmklammern (10) der Vorderseite des Motorrades verbunden hat, und ein vorderes Ende mit dem Aufnahmebereich (10d) des Unterrohres (30) von der Vorderseite des Motorrades verbunden hat, wobei die Enden vorzugsweise an die entsprechenden Lagerbereiche (30, 10a) angeschweißt sind.

## Revendications

1. Motocycle avec un cadre (2) comprenant un cadre principal (2a) avec une unité de tube supérieur (21) comprenant un tube supérieur (7) pour supporter une fourche avant (4), et un gousset (20), étant précisé qu'un deuxième élément de renforcement (31) s'étend en biais vers le bas, du haut du tube supérieur (7) vers l'arrière du motocycle, et qu'un premier élément de renforcement (30) s'étend vers le bas à partir du bas du tube supérieur (7), et qu'une paire de tubes inférieurs gauche et droit (22) s'étend vers l'arrière du motocycle (1), étant précisé que des troisièmes éléments de renforcement (10) sont disposés sous la forme d'une paire de supports de bras oscillant gauche et droit entre les extrémités arrière des tubes inférieurs gauche et droit (22) et l'extrémité arrière du gousset (20) et/ou de l'élément de renforcement supérieur (31) et les relient pour supporter le ou les bras oscillants (5) en vue d'un débattement vertical, et étant précisé que les éléments gauche et droit (10) sont reliés entre eux par un tube transversal (26) qui s'étend dans le sens de la largeur du motocycle,
étant précisé que les éléments de renforcement (10, 30, 31) sont des produits forgés prévus sur une partie du cadre principal (2a) qui exige une grande résistance aux chocs, tandis que l'unité de tube supérieur (21), les tubes (22) et le tube transversal (26) sont des produits non forgés.

2. Motocycle selon la revendication 1, **caractérisé en ce que** le gousset (20) comprend des goussets supérieur et inférieur (20) qui s'étendent en biais vers le bas, en particulier en s'élargissant vers l'arrière du motocycle (1) à partir du tube supérieur (7).

3. Motocycle selon la revendication 2, **caractérisé en ce que** les tubes inférieurs gauche et droit (22) sont reliés à une extrémité inférieure du gousset inférieur (20) et s'étendent vers le bas en direction de l'arrière du motocycle (1).

4. Motocycle selon l'une au moins des revendications 1 à 3, **caractérisé en ce que** l'unité de tube supérieur (21) ou une partie de celle-ci, telle que les goussets supérieur et inférieur (20), le tube supérieur (7) et/ou la partie de liaison (20b), sont des produits moulés.

5. Motocycle selon l'une au moins des revendications 1 à 4, **caractérisé en ce que** les tubes inférieurs droit et gauche (22) et/ou un tube transversal (26) se composent de produits extrudés.

6. Motocycle selon l'une au moins des revendications 1 à 5, **caractérisé en ce que** les éléments de renforcement (10, 30, 31) comprennent une paire de parois latérales (10f, 30b, 31b) et une paroi de liaison (10e, 30a, 31a) pour relier les parois latérales (10f, 30b, 31b), lesdites parois (10e, 10f, 30a, 30b, 31a, 31b) formant entre leurs faces intérieures un espace ouvert vers l'extérieur, et **en ce qu'**une face extérieure (A, B, C) de la paroi de liaison (10e, 30a, 31a), en coupe transversale, est positionnée dans ladite partie du cadre principal (2a) qui exige une grande résistance sur un côté où la plus forte contrainte apparaît, en coupe transversale du cadre principal (2a).

7. Motocycle selon l'une au moins des revendications 2 à 6, **caractérisé en ce que** le premier élément de renforcement comprend un élément de cadre inférieur (30) qui présente une partie supérieure (30c) reliée à une extrémité inférieure du tube supérieur (7), et un cadre inférieur (30d) qui s'étend à partir de ladite partie inférieure (30c) le long d'un bord inférieur du gousset inférieur (20), le cadre inférieur (30d) couvrant le bord inférieur du gousset inférieur (20) par dessous, présentant la paroi de liaison (30a) avec sa face extérieure (A) dirigée vers le bas, et les parois latérales (30b) reliées à chaque bord inférieur du gousset inférieur (20).

8. Motocycle selon l'une au moins des revendications 2 à 7, **caractérisé en ce que** le deuxième élément de renforcement comprend un élément formant rail pour réservoir (31) qui comporte une extrémité supérieure (31c) reliée à une extrémité supérieure du tube supérieur (7), et un rail pour réservoir (31d) qui s'étend à partir de l'extrémité supérieure (31c) le long du bord supérieur du gousset supérieur (20), le rail pour réservoir (31d) couvrant le bord supérieur du gousset supérieur (20) par dessus, et ayant la paroi de liaison (31a) avec sa face extérieure (B) dirigée vers le haut, et les parois latérales (30b) reliées à chaque bord supérieur du gousset supérieur (20).

9. Motocycle selon la revendication 7 ou 8, **caractérisé en ce que** l'extrémité inférieure (30c) de l'élément de cadre inférieur (30) et/ou l'extrémité supérieure (31c) de l'élément formant rail pour réservoir (31) comprennent une embase d'appui (30f, 31f).

10. Motocycle selon l'une au moins des revendications 2 à 9, **caractérisé en ce que** l'unité de tube supérieur (21) a une ouverture au niveau d'une surface inférieure du gousset inférieur (20), et **en ce que** le cadre inférieur (30d) ferme cette ouverture au niveau de la surface inférieure du gousset inférieur (20), la paroi de liaison (30a) avec sa face extérieure (A) étant dirigée vers le bas et les parois latérales (30b) étant positionnées au niveau de chaque bord de l'ouverture au niveau de ladite surface inférieure, et étant précisé que les bords (30b') des parois latérales (30b) sont soudés au gousset inférieur (20).

11. Motocycle selon l'une au moins des revendications 2 à 10, **caractérisé en ce que** l'unité de tube supérieur (21) a une ouverture sur une surface supérieure du gousset supérieur (20), et **en ce que** le rail pour réservoir (31d) ferme ladite ouverture de la surface supérieure du gousset supérieur (20), la paroi de liaison (31a) avec sa face extérieure (B) étant dirigée vers le haut et les parois latérales (31b) étant positionnées au niveau de chaque bord de l'ouverture de la surface supérieure, et étant précisé que les bords (31b') des parois latérales (31b) sont soudés au gousset supérieur (20).

12. Motocycle selon l'une au moins des revendications 2 à 11, **caractérisé en ce qu'**une partie de liaison (20b) est formée d'une seule pièce avec l'unité de tube supérieur (21) qui relie entre elles les parties arrière des gousset supérieur et inférieur (20).

13. Motocycle selon l'une au moins des revendications 2 à 12, **caractérisé en ce qu'**un support de butée arrière (20c) est formé d'une seule pièce avec une extrémité arrière du gousset supérieur (20) et s'étend à partir de celle-ci.

14. Motocycle selon l'une au moins des revendications 1 à 13, **caractérisé en ce que** les troisièmes éléments de renforcement comprennent une paire de supports de bras oscillant gauche et droit (10), étant précisé qu'une partie de la paroi de liaison (10c) de chacun des supports de bras oscillant (10) qui est voisine de la partie de liaison (10i) avec le rail pour réservoir (31d) a sa face extérieure (C) qui est dirigée vers un côté intérieur dans le sens de la largeur du motocycle.

15. Motocycle selon la revendication 14, **caractérisé en ce que** chacun des supports de bras oscillant gauche et droit (10) comprend une moitié inférieure (10c) qui s'étend à peu près à la verticale vers le haut à partir des extrémités arrière respectives des tubes inférieurs gauche et droit (22) positionnés avec un intervalle dans le sens de la largeur du motocycle, vus dans le sens longitudinal du motocycle (1), et une moitié supérieure (10d) qui s'étend en biais vers l'intérieur dans le sens de la largeur du motocycle à partir de la moitié inférieure (10c) jusqu'à une extrémité arrière du rail pour réservoir (31d) positionné au centre dans le sens de la largeur du motocycle, la moitié supérieure (10d) ayant sa paroi de liaison (10e) avec sa face extérieure (C) dirigée vers l'intérieur dans le sens de la largeur du motocycle, tandis que la moitié inférieure (10c) a sa paroi de liaison (10e) avec sa face extérieure (C) dirigée vers l'extérieur.

16. Motocycle selon l'une au moins des revendications 14 à 15, **caractérisé en ce qu'**une partie de liaison (10i) des supports de bras oscillant (10) au rail pour réservoir (31d) est soudée à celui-ci de telle sorte que la paroi de liaison (10e) ait sa face extérieure (C) dirigée vers le côté extérieur, dans le sens de la largeur du motocycle, ladite partie de liaison (10i) avec le rail pour réservoir (31d) ayant une section transversale fermée.

17. Motocycle selon l'une au moins des revendications 14 à 16, **caractérisé en ce que** les extrémités inférieures des supports de bras oscillant gauche et droit (10) sont reliées l'une à l'autre par l'intermédiaire d'un tube transversal (26) cylindrique de préférence angulaire qui s'étend dans le sens de la largeur du motocycle, étant précisé qu'un perçage de travail (26b) est formé de préférence dans une partie dudit tube (26) pour recevoir un boulon de serrage en vue du changement des pédales sur le tube (26).

18. Motocycle selon l'une au moins des revendications 7 à 17, **caractérisé en ce que** le cadre inférieur (30) présente à son extrémité inférieure une partie de réception (30) qui est pourvue d'une ouverture de montage (30h) dirigée vers l'avant par rapport au motocycle, et/ou chacun des supports de bras oscillant gauche et droit (10) présente à son extrémité inférieure une partie de réception (10a) qui est pourvue d'une ouverture de montage (10b) dirigée vers l'avant, et/ou l'extrémité arrière de chacun des tubes inférieurs gauche et droit (22) est fixée à la partie de réception du support de bras oscillant (10) à partir de l'avant du motocycle, tandis que son extrémité avant est fixée à la partie de réception (30g) du cadre inférieur (30) à partir de l'avant du motocycle, lesdites extrémités étant de préférence soudées aux parties de réception respectives (30, 10a).
